# EUROPEAN PATENT APPLICATION

(11) **EP 2 391 149 A1**
(43) Date of publication of application: **30.11.2011**
(21) Application number: 11167440.4
(22) Date of filing: 25.05.2011
(51) Int. Cl.: H04W 12/00

(54) **Configuring wifi parameters via a USB connection**

(30) Priority: 31.05.2010 CN 201010194907
(71) Applicant: Huawei Device Co., Ltd., Shenzhen, Guangdong 518129 (CN)
(72) Inventor: Zhu, Xiaoping, 518129 Shenzhen Guandong (CN)
(74) Representative: Barth, Stephan Manuel

(57) **Abstract**

A method for configuring Wireless Fidelity, WiFi, parameters is provided in an embodiment of the present invention, including: obtaining the WiFi parameters sent by a mobile access point, AP, that supports a WiFi function; by using a universal serial bus, USB, connection when the USB connection is established between a computer terminal and the mobile AP and implementing, by the computer terminal, WiFi Internet access configuration by using the WiFi parameters. A computer terminal for configuring WiFi parameters, a mobile AP that supports a WiFi function, and a system for configuring WiFi parameters are provided in other embodiments of the present invention. Users do not need to enter or configure WiFi parameters because the WiFi parameters are automatically obtained from the mobile AP and automatically configured. This simplifies the process of configuring WiFi parameters, saves the time for configuring WiFi parameters, and improves the accuracy of WiFi parameter configuration.

## Description

### FIELD OF THE INVENTION

The present invention relates to a telecommunication technology field, and in particular, to a method, and a device for configuring WiFi parameters.

### BACKGROUND OF THE INVENTION

To enable a computer terminal to access a mobile access point, AP, that supports a Wireless Fidelity, WiFi, network by using a wireless network adapter for WiFi Internet access, a user must know the WiFi parameters, such as service set identifier, SSID, password, and encryption mode of the mobile AP, and configure relevant WiFi parameters on the computer terminal.

During implementation of the present invention, the inventor finds that in the prior art, users need to manually configure WiFi parameters, and that the configuration is difficult and time-consuming for certain users who do not understand the WiFi parameters. In addition, errors easily occur in manual configuration of WiFi parameters, leading to failure to access a mobile AP.

### SUMMARY OF THE INVENTION

A method, a computer terminal, and a system for configuring WiFi parameters, and a mobile AP that supports a WiFi function, are provided in embodiments of the present invention to free users from manually entering and configuring WiFi parameters.

The present invention is implemented through the following technical solutions:
A method for configuring WiFi parameters, including:
   obtaining the WiFi parameters sent by a mobile AP by using a Universal Serial Bus, USB, connection when the USB connection is established between a computer terminal and the mobile AP that supports a WiFi function; and
   implementing, by the computer terminal, WiFi Internet access configuration by using the WiFi parameters.
A computer terminal for configuring WiFi parameters, including:
   a parameter obtaining module, configured to obtain the WiFi parameters sent by a mobile AP by using a USB connection when the USB connection is established between the computer terminal and the mobile AP that supports a WiFi function; and
   a parameter configuring module, configured to implement WiFi Internet access configuration by using the WiFi parameters obtained by the parameter obtaining module.
A method for configuring WiFi parameters, including:
   establishing, by a mobile AP that supports a WiFi function, a USB connection with a computer terminal; and
   sending WiFi parameters through the USB connection to the computer terminal so that the computer terminal implements WiFi Internet access configuration by using the WiFi parameters.
A mobile AP that supports a WiFi function, including:
   a connection establishing module, configured to establish a USB connection with a computer terminal; and
   a parameter sending module, configured to send the WiFi parameters through the USB connection to the computer terminal so that the computer terminal implements WiFi Internet access configuration by using the WiFi parameters.
   A system for configuring WiFi parameter is provided in an embodiment of the present invention. The system includes a mobile AP stated above and at least a computer terminal stated above.

From the technical solutions provided in the present invention, it can be seen that users do not need to manually enter or configure WiFi parameters because the WiFi parameters are automatically obtained from the mobile AP and automatically configured. This simplifies the process of configuring WiFi parameters, saves the time for configuring WiFi parameters, and improves the accuracy of WiFi parameter configuration.

### BRIEF DESCRIPTION OF THE DRAWINGS

To make the technical solution of the present invention clearer, the accompanying drawings for illustrating the embodiments of the present invention or the prior art are described briefly below. Apparently, the accompanying drawings are for the exemplary purpose only, and person having ordinary skill in the art can derive other drawings from such accompanying drawings without any creative effort.
FIG. 1 shows a handling process according to an embodiment of the present invention;
FIG. 2 shows a structure of a system according to an embodiment of the present invention;
FIG. 3 shows another handling process according to an embodiment of the present invention;
FIG. 4 shows a structure of a computer terminal according to an embodiment of the present invention; and
FIG.5 shows a structure of a mobile AP that supports a WiFi function according to an embodiment of the present invention.

### DETAILED DESCRIPTION OF THE EMBODIMENTS

The technical solution under the present invention is elaborated below with reference to accompanying drawings. Evidently, the embodiments described below are for the exemplary purpose only, without covering all embodiments of the present invention. Those skilled in the art can derive other embodiments from the embodiments given herein without making any creative effort, and all such embodiments shall fall within the protection scope of the present invention.

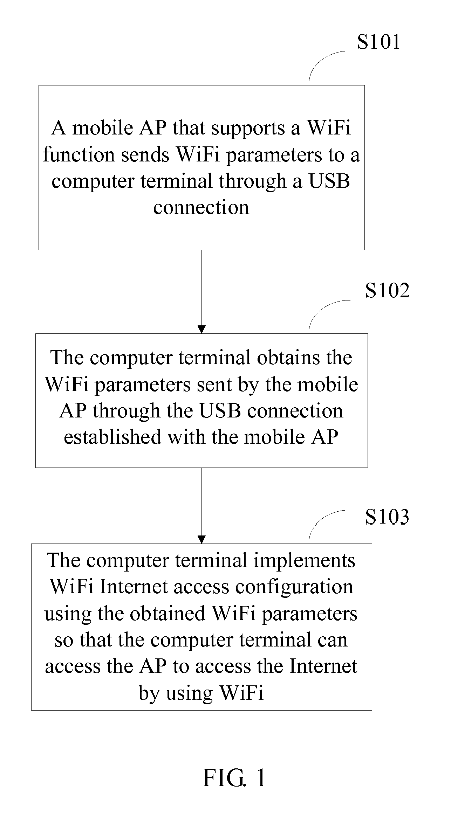

A method for configuring WiFi parameters automatically using a computer terminal is provided in an embodiment of the present invention. The handling process is shown in FIG. 1. The implementation method includes the following processes:
Block S101: A mobile AP that supports a WiFi function sends WiFi parameters to a computer terminal through a USB connection established between the mobile AP and the computer terminal, where the WiFi parameters may include but be not limited to an SSID, a WiFi Internet access authentication password, and a WiFi Internet access radio channel of the AP;
Block S102: The computer terminal obtains the WiFi parameters sent by the mobile AP through the USB connection established with the mobile AP; and
Block S103 : The computer terminal implements WiFi Internet access configuration using the obtained WiFi parameters so that the computer terminal can access the AP to access the Internet by using WiFi.

In the method for automatically configuring WiFi parameters provided in this embodiment of the present invention, WiFi parameters are automatically obtained from the mobile AP and automatically configured. In this case, users do not need to manually enter or configure the WiFi parameters. This simplifies the process of configuring WiFi parameters, saves the time for configuring WiFi parameters, and improves the accuracy of WiFi parameter configuration.

In the above method provided in this embodiment of the present invention, if the mobile AP contains a processor unit that supports recognition, the mobile AP can actively send the WiFi parameters to the computer terminal. In this case, the implementation mode in block S101 is as follows: The mobile AP sends the WiFi parameters to the computer terminal through the USB connection when detecting that the USB connection is established successfully with the computer terminal. The mobile AP may also send the WiFi parameters to the computer terminal after receiving a command for obtaining the WiFi parameters sent by the computer terminal. In this case, before the computer terminal obtains the WiFi parameters from the mobile AP in block S102, the following operation is implemented: When detecting the mobile AP, the computer terminal sends the command for obtaining the WiFi parameters to the mobile AP through the USB connection established with the mobile AP. It can be understood in the following way: Detecting by the computer terminal that a USB connection is established between the computer terminal and the mobile AP, means that the computer terminal detects that a mobile device is connected to the computer terminal through the USB connection. The mobile device can be found on the computer terminal. Then, the computer terminal sends the command for obtaining the WiFi parameters to the mobile device by using the USB connection. In this embodiment, the mobile device is a mobile AP.

After the computer terminal obtains the WiFi parameters, the operation of WiFi Internet access configuration in block S103 specifically includes: invoking an interface function of an operating system of the computer terminal, and filling the WiFi parameters in corresponding WiFi configuration items by using the interface function.

The specific implementation modes in actual applications of this embodiment are described in detail below.

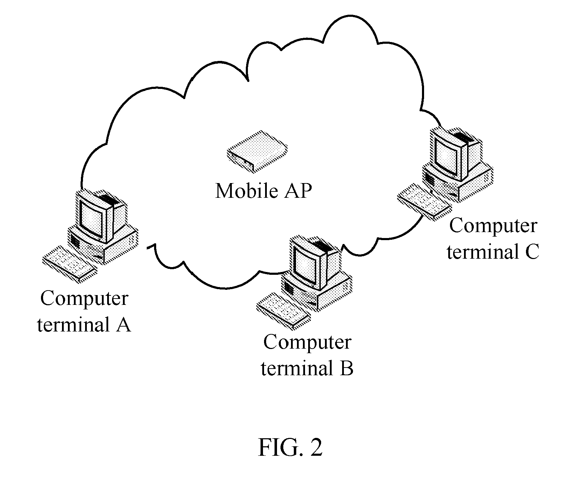

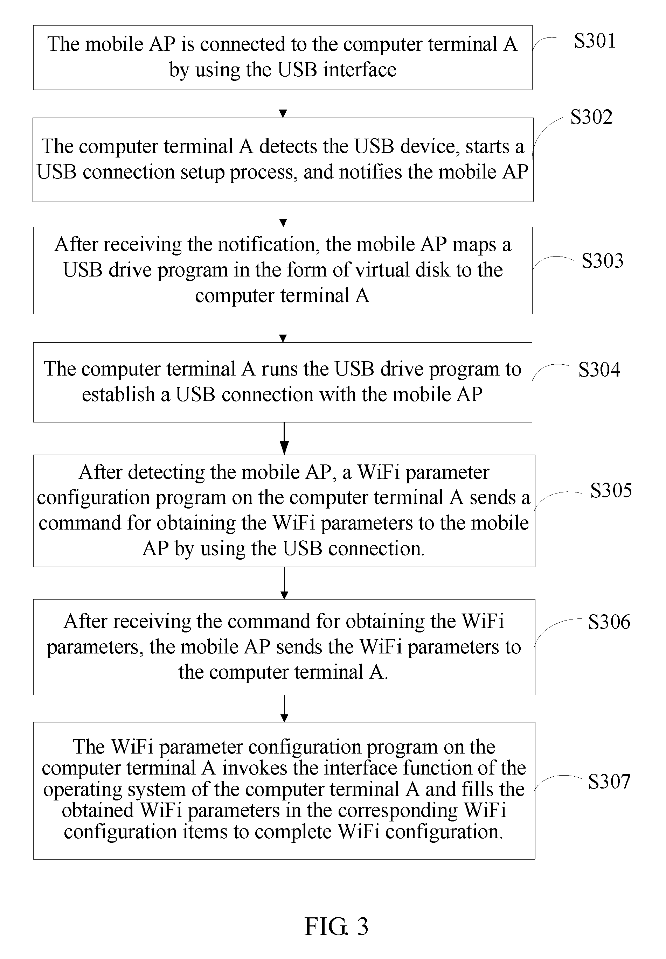

In a network system as shown in FIG. 2, a computer terminal A, a computer terminal B, and a computer terminal C are installed with mobile network adapters that support the WiFi function. A mobile AP supports WiFi access of the computer terminals A, B, and C at the same time. The mobile AP, and the computer terminals A, B, and C provide USB interfaces, and can be interconnected by using the USB interfaces. To enable the computer terminals A, B, and C to access the mobile AP by using WiFi, WiFi parameters must be configured on the three computer terminals. The following takes computer terminal A as an example to describe the process of implementing automatic configuration of the WiFi parameters. As shown in FIG. 3, this process includes:
Block S301: The mobile AP is connected to the computer terminal A by using the USB interface, and is regarded as a USB device.
Block S302: The computer terminal A detects the USB device, starts a USB connection setup process, and notifies the mobile AP.
Block S303: After receiving the notification, the mobile AP maps a USB drive program in the form of virtual disk to the computer terminal A.
Block S304: The computer terminal A runs the USB drive program to establish a USB connection with the mobile AP.
Block S305: After detecting the mobile AP, a WiFi parameter configuration program on the computer terminal A sends a command for obtaining the WiFi parameters (for example, the command can be an AT command, a DIAG command, or a self-defined command) to the mobile AP through the USB connection, where the WiFi parameter configuration program is configured to obtain and configure the WiFi parameters, and the code implementation mode of the WiFi parameter configuration program can be obtained by those skilled in the art by using existing programming means, and therefore is not described in detail herein.
Block S306: After receiving the command for obtaining the WiFi parameters, the mobile AP sends the WiFi parameters to the computer terminal A.
Block S307: The WiFi parameter configuration program on the computer terminal A invokes the interface function of the operating system of the computer terminal A and fills the obtained WiFi parameters in the corresponding WiFi configuration items to complete WiFi configuration.

In the preceding embodiment of the present invention, the computer terminal A establishes the USB connection with the mobile AP, and automatically configures WiFi parameters after the USB drive program is automatically installed. This simplifies the process of configuring WiFi parameters, saves the time for configuring WiFi parameters, and improves the accuracy of WiFi parameter configuration.

In the preceding handling process, the mobile AP sends the WiFi parameters to the computer terminal A according to the received command for obtaining the WiFi parameters. If the mobile AP contains a processor unit that supports recognition, the alternative process of blocks S305 and S306 is as follows: The mobile AP detects the USB connection established with the computer terminal A, and sends WiFi parameters to the computer terminal A.

The parameter configuration modes for the computer terminals B and C are similar to the parameter configuration mode for the computer terminal A, and therefore are not described in detail herein.

All or certain processes in the preceding embodiment of the present invention can be performed by a program instructing related hardware. The program can be stored in a computer readable storage medium. When being executed, the program performs the processes in the preceding embodiment of the present invention. The storage media include a Read Only Memory, ROM, a Random Access Memory, RAM, a disk, and compact disk that can store program codes.

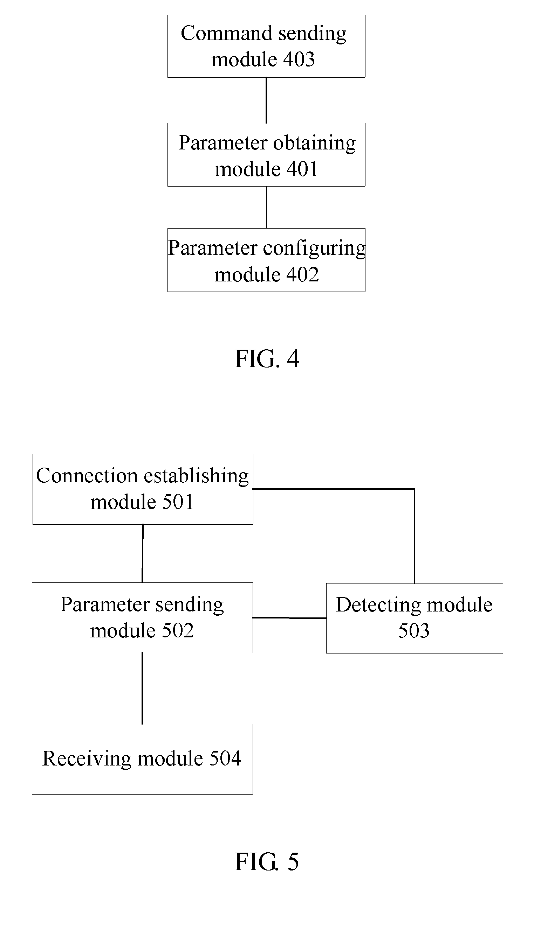

A computer terminal is provided in an embodiment of the present invention. The computer terminal can automatically configure WiFi parameters. FIG. 4 shows a structure of the computer terminal, which includes:
a parameter obtaining module 401, configured to obtain WiFi parameters sent by a mobile AP that supports a WiFi function by using a USB connection when the USB connection is established between the computer terminal and the mobile AP, where the WiFi parameters may include but be not limited to an SSID, a WiFi Internet access authentication password, and a WiFi Internet access radio channel of the AP; and
a parameter configuring module 402, configured to use the WiFi parameters obtained by the parameter obtaining module 401 so that the computer terminal can access the mobile AP to implement WiFi Internet access.

The parameter configuring module 402 is specifically configured to invoke an interface function of an operating system of the computer terminal, and fill the WiFi parameters in corresponding WiFi configuration items by using the interface function.

The computer terminal provided in this embodiment of the present invention automatically obtains the WiFi parameters from the mobile AP and automatically configures the WiFi parameters. Therefore, users do not need to manually enter or configure the WiFi parameters. This simplifies the process of configuring WiFi parameters, saves the time for configuring WiFi parameters, and improves the accuracy of WiFi parameter configuration.

The computer terminal provided in the foregoing embodiment of the present invention may further include a command sending module 403, configured to send a command for obtaining the WiFi parameters to the mobile AP through the USB connection established with the mobile AP when detecting the mobile AP. It can be understood in the following way: Detecting by the command sending module 403 that a USB connection is established between the computer terminal and the mobile AP means that the command sending module 403 detects that a mobile device is connected to the computer terminal through the USB connection. The mobile device can be found on the computer terminal. Then, the computer terminal sends the command for obtaining the WiFi parameters to the mobile device through the USB connection. In this embodiment, the mobile device is a mobile AP.

A mobile AP that supports a WiFi function is provided in another embodiment of the present invention. FIG. 5 shows a structure of the mobile AP which includes:
a connection establishing module 501, configured to establish a USB connection with a computer terminal; and
a parameter sending module 502, configured to send WiFi parameters to the computer terminal through the USB connection with the computer terminal, where the WiFi parameters may include but be not limited to an SSID and WiFi Internet access password of the AP.

The parameter sending module 502 can actively send the WiFi parameters to the computer terminal. In this case, the mobile AP further includes a detecting module 503, which is configured to detect whether the USB connection is established successfully with the computer terminal. It can be understood in the following way: The detecting module 503 detects whether the connection establishing module 501 successfully establishes the USB connection between the AP and the computer terminal. The parameter sending module 502 is further configured to send the WiFi parameters through the USB connection established with the computer terminal to the computer terminal when the detecting module 503 detects that the USB connection is established successfully with the computer terminal. It can be understood in the following way: The parameter sending module 502 is further configured to send the WiFi parameters to the computer terminal through the USB connection after the detecting module 503 detects that the connection establishing module 501 successfully establishes the USB connection with the computer terminal. The mobile AP may further include a receiving module 504, which is configured to receive the command for obtaining the WiFi parameters sent by the computer terminal. The parameter sending module 502 can send the WiFi parameters to the computer terminal through the USB connection established with the computer terminal according to the command for obtaining the WiFi parameters received by the receiving module 504.

A system for configuring WiFi parameters is provided in an embodiment of the present invention. FIG. 2 shows a structure of the system, which includes a mobile AP stated above, and at least one of the computer terminals stated above (for example, computer terminals A, B, and C in FIG. 2).

In conclusion, the above are merely preferred embodiments of the present invention. However, the scope of the present invention is not limited thereto. Changes or replacements that can be easily derived by persons skilled in the ordinary art within the technical scope of the present invention should fall within the scope of the present invention. Therefore, the protection scope of the present invention is subject to the appended claims.

## Claims

1. A method for configuring Wireless Fidelity, WiFi, parameters, comprising:
obtaining the WiFi parameters sent by a mobile access point, AP, that supports a WiFi function through a universal serial bus, USB, connection, when the USB connection is established between a computer terminal and the mobile AP; and
implementing, by the computer terminal, WiFi Internet access configuration by using the WiFi parameters.

2. The method according to claim 1, further comprising:
sending a command for obtaining the WiFi parameters to the mobile AP through the USB connection established with the mobile AP, when the mobile AP is detected.

3. The method according to claim 1 or 2, wherein implementing, by the computer terminal, WiFi Internet access configuration by using the WiFi parameters comprises:
invoking an interface function of an operating system of the computer terminal, and filling the WiFi parameters in corresponding WiFi configuration items by using the interface function.

4. A computer terminal for configuring Wireless Fidelity, WiFi, parameters, comprising:
a parameter obtaining module, configured to obtain the WiFi parameters sent by a mobile access point, AP, that supports a WiFi function through a universal serial bus, USB, connection, when the USB connection is established between the computer terminal and the mobile AP; and
a parameter configuring module, configured to implement WiFi Internet access configuration by using the WiFi parameters obtained by the parameter obtaining module.

5. The computer terminal according to claim 4, wherein the computer terminal further comprises a command sending module configured to send a command for obtaining the WiFi parameters to the mobile AP through the USB connection established with the mobile AP, when the mobile AP is detected.

6. The computer terminal according to claim 4 or 5, wherein the parameter configuring module is further configured to invoke an interface function of an operating system of the computer terminal, and fill the WiFi parameters in corresponding WiFi configuration items by using the interface function.

7. A method for configuring Wireless Fidelity, WiFi, parameters, comprising:
establishing, by a mobile access point, AP, that supports a WiFi function, a universal serial bus, USB, connection with a computer terminal; and
sending WiFi parameters through the USB connection to the computer terminal so that the computer terminal implements WiFi Internet access configuration by using the WiFi parameters.

8. The method according to claim 7, further comprising:
sending, by the mobile AP, the WiFi parameters to the computer terminal through the USB connection when the mobile AP detects that the USB connection with the computer terminal is established successfully.

9. The method according to claim 7, further comprising:
sending the WiFi parameters through the USB connection established with the computer terminal to the computer terminal after receiving a command for obtaining the WiFi parameters sent by the computer terminal.

10. A mobile access point, AP, that supports a Wireless Fidelity, WiFi, function, comprising:
a connection establishing module, configured to establish a universal serial bus, USB, connection with a computer terminal; and
a parameter sending module, configured to send WiFi parameters through the USB connection to the computer terminal so that the computer terminal implements WiFi Internet access configuration by using the WiFi parameters.

11. The mobile AP according to claim 10, wherein:
the mobile AP further comprises a detecting module, configured to detect whether the USB connection is established successfully with the computer terminal; and
the parameter sending module is further configured to send the WiFi parameters through the USB connection established with the computer terminal to the computer terminal, when the detecting module detects that the USB connection is established successfully with the computer terminal.

12. The mobile AP according to claim 10, wherein:
the mobile AP further comprises a receiving module, configured to receive a command for obtaining the WiFi parameters sent by the computer terminal; and
the parameter sending module is further configured to send the WiFi parameters to the computer terminal through the USB connection established with the computer terminal when the receiving module receives the command for obtaining the WiFi parameters sent by the computer terminal.
